# EUROPEAN PATENT APPLICATION

(11) **EP 1 104 065 A1**
(43) Date of publication of application: **30.05.2001**
(21) Application number: 00500240.7
(22) Date of filing: 20.11.2000
(51) Int. Cl.: H02G 3/08, H02G 3/06

(54) **Cable trapping device for an electrical apparatus assembly box**

(30) Priority: 24.11.1999 ES 9902972 U
(71) Applicant: APARELLAJE ELECTRICO, S.A., E-08903 L'Hospitalet de Llobregat (ES)
(72) Inventor: Benito Navazo, Juan Manuel, 08190 Sant Cugat Del Valles (Barcelona) (ES)
(74) Representative: Curell Aguilà, Mireia

(57) **Abstract**

A cable trapping device for an electrical apparatus (3) assembly box (1), the assembly box (1) having at least one connection window (9), the device being located in, or in the proximity of, the connection window (9), and allowing an insulated electrical conductor (8) to be slid in lengthwise through the window (9) in one direction and preventing removal in the opposite direction. The window (9) is provided with a fixed cut-away portion (12), which is disposed opposite to a moving cut-away portion (11) provided in the free end of resilient tab (10), there being formed between the fixed (12) and moving (11) cut-away portions a passage which, the lesser dimension thereof measured in the longitudinal direction of the tab (10) being smaller than the diameter of the electrical conductor (8), allows the electrical conductor (8) to pass in the direction of entry into the assembly box (1), by flexing of the tab (10) inwardly of the assembly box (1) and retains the electrical conductor (8) in the direction of removal from the assembly box (1) against a pulling force exerted in the direction of removal, by wedging of the moving cut-away portion (11) of the resilient tab (10) against the insulation of the electrical conductor (8).

## Description

This invention relates to a cable trapping device for an electrical apparatus assembly box. Particularly, the device consists of an arrangement of the type which is located in, or in the proximity of, the connection windows of an electrical apparatus assembly box, particularly where the apparatus is to be mounted in openable raceways for electrical conductors, and which allows an insulated electrical conductor to be slid in lengthwise in one direction and prevents removal from the apparatus by sliding in the opposite direction, with a view to allowing the apparatus to be connected to the electrical conductors and securing such connection against pulling forces exerted on said conductors away from said assembly box.

Several devices devised for such purpose are known, such as clamps with screws attached to the box, narrow slits bevelled in one direction only in the walls of the box, etc. These devices do not solve the problem completely, since they are troublesome to use, such as is the case of the said screwed clamps, or the application thereof is limited, as is the case of the bevelled slits which are only valid for a single gauge of electrical conductor and are unreliable.

With a view to overcoming such drawbacks, it would be desirable to have a device which automatically allowed a wide range of electrical conductor gauges to be inserted into the assembly box at the time of connecting the electrical apparatus and which prevented, also automatically, withdrawal of the conductors, once connected, by withstanding pulling forces to which they may be subjected.

In view of the foregoing, the cable trapping device for an electrical apparatus assembly box of the invention has been devised. Accordingly, the windows for the passage of the electrical connecting conductors contemplated in the electrical apparatus assembly box are provided with a fixed curved cut-away portion, the shape of which conforms to the diameters of a range of insulated conductors appropriate for the power of the apparatus, and which is disposed opposite to a similar moving cut-away portion provided in the free end of resilient tab. A passage is formed between said fixed and moving cut-away portions. Since the lesser dimension of the passage in the longitudinal direction of the tab is smaller than the diameter of the electrical conductors to be connected, it allows the electrical conductors to pass in the direction of entry into the electrical apparatus assembly box for connection, by flexing of the tab inwardly of the box. On the other hand, it prevents disconnection of the electrical conductors by retaining them against pulling forces exerted in a longitudinal direction away from the box, by wedging of the moving cut-away portion of the resilient tab against the insulation of the electrical conductor.

A preferred feature of the invention is that both the resilient tabs and the fixed cut-away portions are formed integral with the electrical apparatus assembly box without excluding, however, that one or the other or both of them may be inserts.

A further feature of the invention is that the fixed cut-away portion is situated on the edge of the windows closest to the bottom wall of the electrical apparatus assembly box.

Finally, it is contemplated in the invention that the width of the resilient tabs and of the fixed cut-away portion is smaller than the width of the windows in which they are disposed.

To facilitate an understanding of the foregoing ideas, there is described hereinafter one preferred embodiment of the invention, with reference to the accompanying illustrative drawings, in which:

Figure 1 is a perspective view of assembly box for electrical apparatus provided with the cable trapping devices of the invention.

Figure 2 is a front elevation view of a part of a wall of the box of the previous figure corresponding to the arrangement of a cable trapping device according to the invention in a connection window thereof.

Figure 3 is a cross section view of the box of Figure 1, along a mean longitudinal plane passing through one of the connection window thereof provided with the device of the invention, showing the position of the cable trapping device and of a cable or electrical conductor before penetration of the latter in the box for connection thereof to the electrical apparatus.

Figure 4 is a similar view to the previous figure, in which the electrical conductor has been inserted in the box, has been connected to the electrical apparatus and has been retained in the box by wedging of the cable trapping device of the invention.

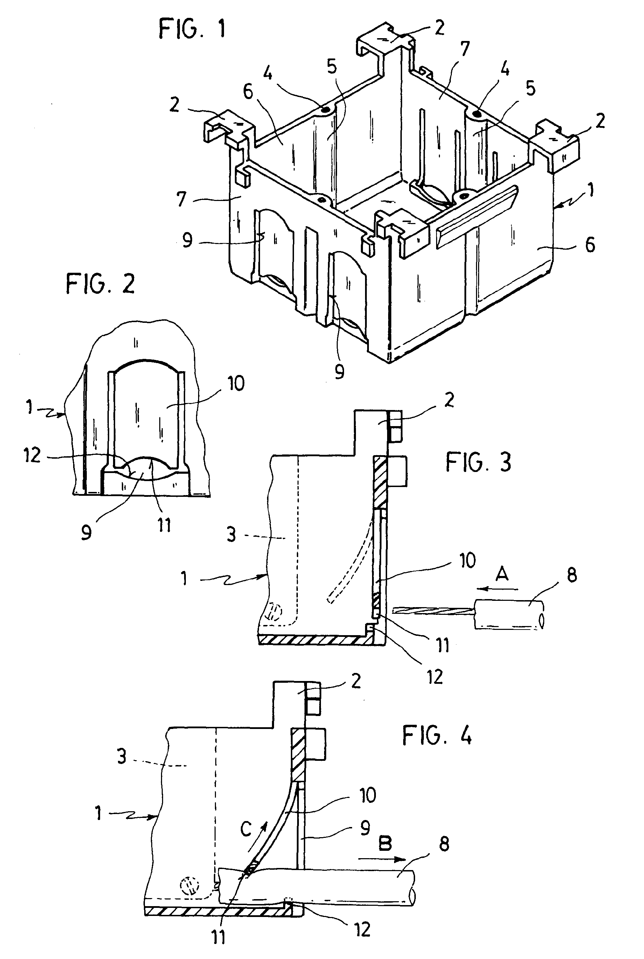

Figure 1 shows a box 1 for the assembly of electrical apparatus such a plug sockets, circuit breakers, switches, fuses, differential switches, etc., which is provided with means for being supported in a raceway, not shown, which in the present example have the form of arms 2 which may be inserted in slots provided in the raceway, with means for installation of the electrical apparatus 3, formed here by a frame, not shown either, which is attached to the box with the apparatus by means of screws threaded into blind holes 4 of the columns 5 provided in the longitudinal walls 6, parallel to the walls of the raceway in which the box is installed, and in the transverse walls 7 which, as the name thereof indicates, are transverse to the walls of the raceway and, finally, with access means allowing for insertion of an electrical conductor 8, formed in this case by connection windows 9 which are openable, unlike the usual situation of other boxes, in which such access means are formed by weakened areas of the appropriate walls of the assembly box and which may be broken to a greater or lesser extent, depending on the gauge of the pertinent electrical cable.

According to the invention, as may be seen in Figures 2 and 3, the openable nature of the connection windows is obtained by the arrangement therein of resilient tabs 10 which are provided with a moving cut-away portion 11 and are disposed coplanar with and opposite to a fixed cut-away portion 12.

As shown in the figures, the resilient tabs 10 and the facing fixed cut-away portions 12 are formed integral with the assembly box 1 itself. Nevertheless, the resilient tabs 10 and, even, the fixed cut-away portions 12 may consist of inserts attached to the box by mechanical arrangements such as plugging-in, rivetting, etc., or even by adhesive arrangements such as welding, gluing, etc.

The ensemble of resilient tab 10 and fixed cut-away portion 12 is comprised in the opening of the connection window 9, as may be seen in the figures, with the width of the resilient tabs 10 being preferably less than the width of the connection window 9, at the same time as the fixed cut-away portion 12 forms one side of the connection window 9 in opposition to the root of the resilient tab 10 in the assembly box 1 for electrical apparatus 3.

Under these conditions, as shown in Figure 3, to insert an electrical conductor 8 in the box 1 for connection to an electrical apparatus 3, the said electrical conductor 8 is moved longitudinally in the direction of the arrow A, whereby, by overcoming the low bending strength of the resilient tab 10, the latter will flex, as shown by the dotted line of Figure 3 and in the full line in Figure 4, to allow the electrical conductor 8 to be inserted in the box 1 and to be connected to the electrical apparatus 3, as shown in Figure 4.

Once the electrical conductor 8 has been connected to the electrical apparatus 3, as shown in Figure 4, if it is pulled in the direction of the arrow B, the moving cut-away portion 11 of the resilient tab 10 immediately wedges automatically against the surface of the insulation of the electrical conductor 8, biting into it and creating a compression thrust in the direction of the arrow C along the resilient tab 10, preventing removal of the electrical conductor 8 and avoiding therewith possible accidental disconnection of the electrical apparatus 3 caused by involuntary pulls on the electrical conductor 8.

## Claims

1. A cable trapping device for an electrical apparatus (3) assembly box (1), said assembly box (1) having at least one connection window (9), said device being located in, or in the proximity of, said connection window (9), said device allowing an insulated electrical conductor (8) to be slid in lengthwise through said window (9) in one direction and preventing removal in the opposite direction, said device assuring connection between said electrical conductor (8) and said electrical apparatus (3) against pulling forces exerted on said electrical conductor (8), characterized in that said window (9) is provided with a fixed cut-away portion (12), which is disposed opposite to a moving cut-away portion (11) provided in the free end of resilient tab (10), there being formed between said fixed (12) and moving (11) cut-away portions a passage which, with the lesser dimension thereof measured in the longitudinal direction of said tab (10) being smaller than the diameter of said electrical conductor (8), allows said electrical conductor (8) to pass in the direction of entry into said assembly box (1), by flexing of said tab (10) inwardly of said assembly box (1) and retains said electrical conductor (8) in the direction of removal from said assembly box (1) against a pulling force exerted in the direction of removal, by wedging of said moving cut-away portion (11) of said resilient tab (10) against the insulation of said electrical conductor (8).

2. The device of claim 1, characterized in that said resilient tab (10) is formed integral with said assembly box (1).

3. The device of claim 1, characterized in that said fixed cut-away portion (12) is formed integral with said assembly box (1).

4. The device of claim 1, characterized in that said fixed cut-away portion (12) is situated on the edge of said window (9) closest to the bottom wall of said assembly box (1).

5. The device of claim 1, characterized in that said resilient tab (10) and said fixed cut-away portion (12) are inserts fitted to said electrical apparatus assembly box (1).

6. The device of claim 1, characterized in that the ensemble formed by said resilient tab (10) and said fixed cut-away portion (12)is comprised within the opening of said window (9) of said assembly box (1).

7. The device of claim 1, characterized in that the width of said resilient tab (10) and of said fixed cut-away portion (12) is less than the width of said window (9).

8. The device of claim 1, characterized in that said fixed cut-away portion (12) and said moving cut-away portion (11) are curved.

9. The device of claim 8, characterized in that said curve of said fixed cut-away portion (12) and said moving cut-away portion (11) is shaped in accordance with the diameters of a range of insulated conductors appropriate for the power of said apparatus.
